# FASCICULE DE BREVET EUROPEEN

(11) **EP 0 676 310 B1**
(45) Date de publication et mention de la délivrance du brevet: **18.03.1998**
(21) Numéro de dépôt: 94120243.4
(22) Date de dépôt: 14.12.1990
(51) Int. Cl.: B60N 3/14, F23Q 7/00

(54) **Allume-cigares, notamment pour véhicules automobiles**
Zigarettenanzünder, vorzugsweise für Kraftfahrzeuge
Cigarette lighter, especially for motor vehicles

(30) Priorité: 18.12.1989 FR 8916702
(43) Date de publication de la demande: 11.10.1995
(62) Demande divisionnaire de: 90403590.4
(73) Titulaire: VALEO VISION, 93012 Bobigny Cédex (FR)
(72) Inventeur: Mallet, Christian, F-91490 Milly-La-Foret (FR)
(74) Mandataire: Gamonal, Didier

(56) Documents cités:
- EP-A- 0 200 247
- DE-A- 1 632 593
- DE-A- 2 824 657
- DE-A- 3 237 995
- FR-A- 2 272 343
- FR-A- 2 444 587
- US-A- 4 500 774

## Description

La présente invention concerne les allume-cigares, notamment pour véhicules automobiles.

Ainsi qu'on le sait et tel que décrit, par exemple, dans le document US-A-4,500,774 (figure 1), un allume-cigares comporte une bague conductrice de lumière ou bague éclairante, un corps d'allumage pourvu d'un bilame, et un bouchon chauffant amovible logé dans le corps d'allumage.

C'est par l'intermédiaire de la bague éclairante que le corps d'allumage est usuellement propre à être fixé à une paroi du véhicule.

Ce corps présente un fond à partir duquel s'érigent en saillie vers l'extérieur des languettes pour alimentation de allume-cigares. L'une des languettes, dite première languette, est en contact avec le corps d'allumage.

Il est doté également de moyens d'engagement pour coopération avec des moyens d'engagement complémentaires que présente la bague éclairante et attelage à ladite bague.

Pour sa fixation dans une paroi fixe du véhicule, la bague est dotée de moyens de montage pour coopération avec des moyens de montage complémentaires portés par une paroi solidaire du véhicule.

Le corps d'allumage porte également un bilame destiné à recevoir le bouchon chauffant, qui est automatiquement éjecté, lorsque la résistance qu'il porte est chaude.

La présente invention a pour objet de créer une sécurité.

Ce problème est résolu, selon l'invention, par la partie caractérisante de la revendication 1.

Grâce à l'invention il est établi une sécurité, la languette de sécurité étant propre à coopérer avec ladite première languette d'alimentation en contact avec le corps d'allumage pour établissement d'un court-circuit.

La description qui va suivre, à titre d'exemple, illustre l'invention en référence aux dessins annexés dans lesquels :
- la figure 1 est une vue en perspective d'un allume-cigares selon le brevet US-A-4,500,774 ;
- la figure 2 est une vue en perspective avec une coupe de la paroi du véhicule, montrant le montage de principe selon l'invention ;
- la figure 3 est une vue schématique en coupe, montrant la bague éclairante et le corps d'allumage une fois montée dans la paroi ;
- la figure 4 est une vue analogue à la figure 2 pour un second exemple de réalisation ;
- la figure 5 est une vue analogue à la figure 3 pour ce second exemple de réalisation ;
- la figure 6 est une vue en bout selon la flèche VI de la figure 5 ;
- la figure 7 est une vue en coupe selon la ligne VII-VII de la figure 6 ;
- la figure 8 est une vue en coupe selon la ligne VIII-VIII de la figure 5 ;
- la figure 9 est une vue schématique en coupe selon la ligne I-I de la figure 6 ;
- la figure 10 est une vue analogue à la figure 3 pour un troisième exemple de réalisation.

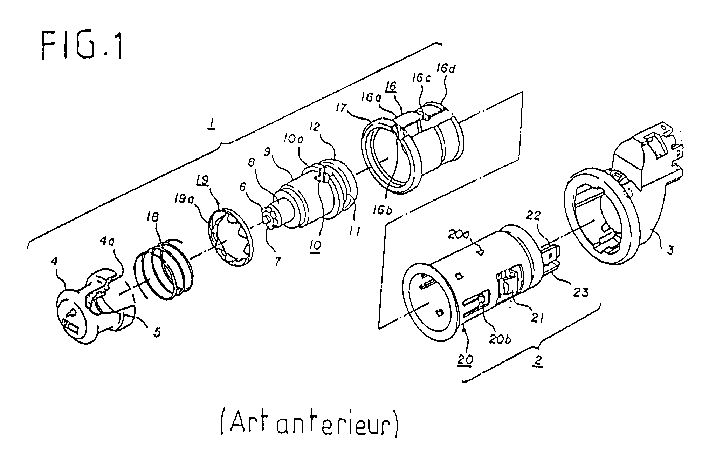

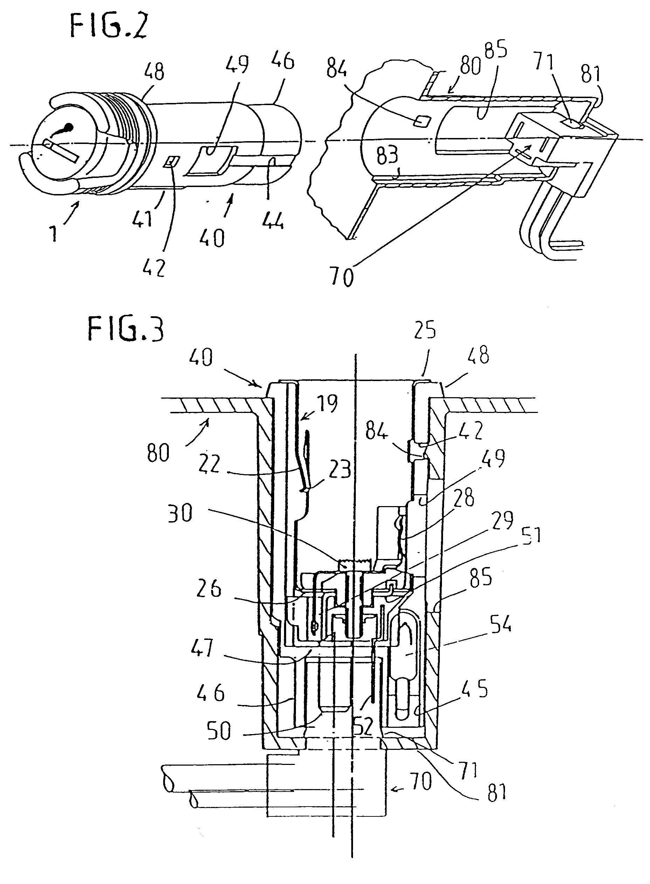

Comme mieux visible à la figure 2, pour formation d'un allume-cigares pour véhicules automobiles, il est mis en oeuvre, de manière connue en soi, un corps d'allumage 19 entouré par une bague conductrice de lumière ou bague éclairante 40 propre à être montée dans une paroi 80 du véhicule automobile.

Le corps d'allumage 19 sert de réceptacle au bouchon chauffant 1 et est attelé à la bague 40.

Pour ce faire le corps 19 présente des moyens d'engagement 24, ici sous forme de redents, pour coopération avec des moyens d'engagement complémentaires 24', ici sous forme de crans, que présente la bague éclairante 40 à cet effet.

La bague 40, en matière plastique translucide et électriquement isolante, présente des moyens de montage 42 pour montage dans la paroi 80 présentant pour cela des moyens de montage complémentaires.

Ces moyens consistent ici en deux ouvertures diamétralement opposées 42 propres à coopérer avec des redents 84 portés par la paroi 80.

Cette bague 40 présente une collerette 48 et ainsi une fois montée par encliquetage, celle-ci est immobilisée en rotation par les redents 84 et en translation dans un sens par les redents 84 et dans l'autre sens par sa collerette 48.

Pour mémoire on rappellera que le corps d'allumage 19 de forme annulaire, ici cylindrique à section circulaire, présente deux languettes 22, à crochets ou crans 23, diamétralement opposées, propres à l'accrochage du bouchon d'allume-cigares 1.

Ce corps 19 est en matériau électriquement conducteur, ici métallique.

Il présente un fond 26 troué pour montage, notamment, d'une bague électriquement isolante 61, ainsi qu'une collerette 25 pour coopération à son extrémité libre avec la collerette 48.

Ainsi ce corps 19 est enfilé dans la bague 40 et est immobilisé par celle-ci du fait de la présence des redents 24 et de la collerette 25.

A partir du fond 26 s'érigent vers l'extérieur axialement des languettes d'alimentation 50 et 51 reliées respectivement à la borne positive et négative de la batterie, le corps 19 étant relié ici à la borne négative de la batterie.

La bague éclairante 40 s'étend au-delà du fond 26 du corps d'allumage 19 et elle présente extérieurement au corps d'allumage 19 une extrémité libre formant une première partie 46,47 d'un dispositif de connexion des languettes 50,51 d'alimentation de l'allume-cigares.

Plus précisément (figure 3) la bague 40 est de forme tubulaire complémentaire à celle du corps 19 et présente un fond percé 47, pour le passage de languettes d'alimentation 50,51.

Ce fond 47 se prolonge vers l'extérieur, dans l'encombrement radial (ici diamétral) de la bague 40, par une paroi 46 d'orientation axiale propre à coopérer avec une seconde partie 70 complémentaire de connecteur portée par le véhicule pour formation d'un connecteur.

Par commodité l'extrémité de la bague 40 présentant le fond 47 et la paroi 46, formant un trou borgne, sera dénommée extrémité libre par opposition à l'extrémité 48 venant au contact de la paroi 80.

Comme visible à la figure 2, la paroi 80 présente axialement une protubérance creuse, de forme complémentaire à la bague 40, fermée par un fond 81.

Cette protubérance présente deux ouvertures 85 diamétralement opposées et son fond 81 est ouvert pour montage par encliquetage du corps de la seconde partie 70 du connecteur présentant à cet effet des crans 71.

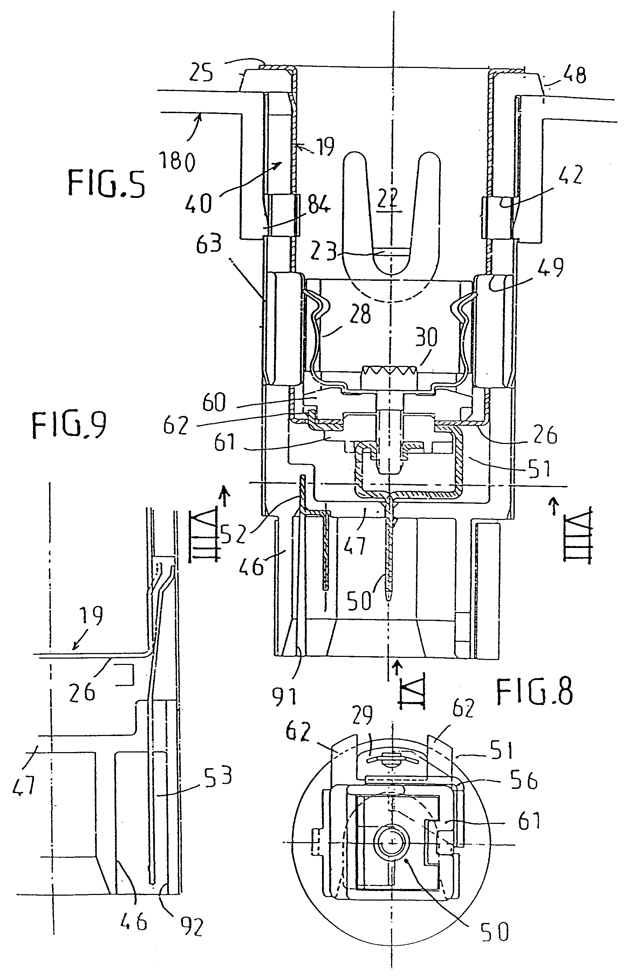

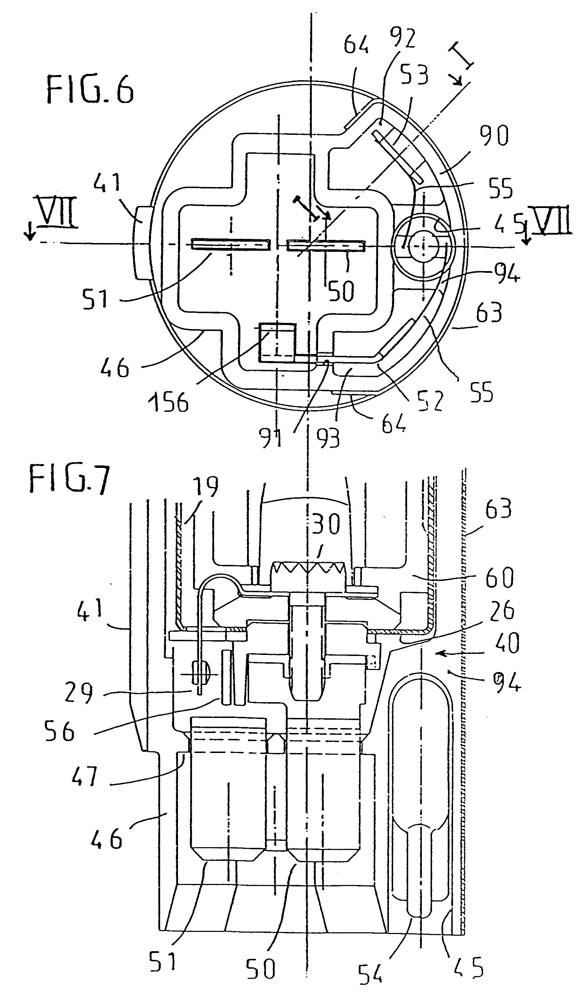

La bague 40 présente deux rainures 44 adaptées aux dimensions des redents 84, lesdites rainures 44 s'étendant de l'extrémité libre de la bague 40 jusqu'à des ouvertures 49 prévues pour dégager le bilame 28 dont est pourvu le corps d'allumage 19. Pour plus de précision, on se reportera au document US-A-4,500,774, sachant que le bilame est monté à l'intérieur du corps d'allumage 19 (figures 5,7,10) et possède deux lames à crans d'orientation axiale pour accrochage avec le bouchon chauffant de l'allume-cigares et chauffage de son corps de chauffe. Le bilame 28 a en section une forme de U (figures 5,7,10).

Cette bague 40 présente également une languette longitudinale 41 pour coopération avec une rainure 83 de la paroi 80.

Ainsi qu'on l'aura compris le fond 47 et la paroi 46 délimitent une première partie du connecteur et il est possible d'assembler la bague 40, le corps d'allumage 19 et le bouchon 1 dans une unité de production, puis de monter cet ensemble unitaire chez le constructeur par simple enfilage axial, les redents 84 et la rainure 83 formant un détrompeur, en sorte que les parties de connexions 46 et 70 se montent automatiquement l'une dans l'autre, la première partie 46,47 constituant la partie femelle, tandis que la seconde partie 70 constitue la partie mâle.

Ainsi la languette 41 et les rainures 44 constituent des moyens de guidage coopérant avec les moyens de guidage complémentaires de la paroi 80 formés par les redents 84 et la rainure 83.

Grâce à ces dispositions il devient possible de monter aisément une lampe d'éclairage 54 et suivant une caractéristique importante la bague éclairante 40 présente intérieurement au-delà du fond 26 du corps d'allumage 19 et latéralement par rapport à la première partie de connecteur 46,47, un logement 45 pour montage de la lampe d'éclairage 54.

Ainsi la lampe 54 est logée à l'intérieur du contour de la bague 40.

Comme visible à la figure 3, ce logement 45 consiste en un trou borgne, ouvert en direction opposée au fond 47 tout comme la paroi 46, et pour l'alimentation de la lampe 54 il est prévu, d'une part, une languette 52 propre à être connectée à la borne positive de la batterie, la partie 70 étant agencée en conséquence (figure 2), et, d'autre part, une languette 53 décrite ci-après en contact avec le corps d'allumage 19 lui-même relié à la masse ou à la borne négative de la batterie par la languette 51.

On notera que le bilame 28 est pourvu selon l'invention d'une languette de sécurité 29, ledit bilame 28 étant porté par le corps d'allumage 19 et assemblé à celui-ci par l'intermédiaire d'un organe de fixation 30 ici une vis à tête crantée pour auto-nettoyage, comme décrit ci-après.

La languette de sécurité 29 traverse le fond 26 du corps d'allumage 19 à la faveur d'un trou non référencé à la figure 3 et à la figure 7. Elle est entourée par la bague éclairante 40 (figures 3 et 7).

Bien entendu (figure 4) la seconde partie du connecteur 170 peut ne pas être fixée à la paroi 180, celle-ci présentant alors simplement une ouverture 181, à la faveur de laquelle sont formés des redents 84 et la rainure 83.

Dans ce cas, on assemble l'ensemble bague éclairante 40 - corps d'allumage 19 - bouchon chauffant 1 (non représenté ici par simplification) à la seconde partie 170 du connecteur, puis on enfile le tout dans l'ouverture 181.

Comme mieux visible à la figure 5, cette ouverture 181 est formée à la faveur d'un manchon annulaire d'orientation axiale, les redents 84 étant disposés à l'extrémité dudit manchon.

On notera que la bague 40 est entourée par un carénage 63 de protection.

La languette 50 a une forme tortueuse et présente un trou fileté, comme visible dans les figures 5 et 7 formé dans une partie transversale par rapport à la partie courante de la languette s'étendant axialement et traversant le fond 47 à la faveur d'une ouverture que présente ledit fond. Le trou fileté est propre à recevoir une vis 30 de fixation.

Cette partie transversale est engagée dans une creusure de la bague d'isolement 61, ladite bague 61 portant une partie transversale appartenant à la languette 51 placée côte-à-côte par rapport à la languette 50 (figure 7).

La languette 51 traverse également axialement le fond 47 à la faveur d'une ouverture et elle est traversée par la bague 61.

La partie transversale de la languette 51, dite première languette, est au contact du fond 26 et s'étend à l'extérieur du corps 19.

Sur l'autre face du fond 26 est disposée une seconde bague électriquement isolante 60 portant le bilame 28, en sorte que le corps d'allumage 19 porte intérieurement à isolation électrique le bilame 28.

La vis 30, par sa tête, s'appuie sur le bilame 28 et vient serrer l'ensemble 28-60-26-51-61-50 après traversée des pièces 28-60,61 présentant des ouvertures à cet effet, en sorte que ledit ensemble est solidaire du corps 19 dont le fond 26 est percé à cet effet, la bague 61 pénétrant dans ladite ouverture, comme visible dans les figures 5 et 7.

Le bilame 28 porte selon l'invention une languette de sécurité 29 portant un plot de contact propre à coopérer avec une partie 56 d'orientation axiale (figures 7 et 8) de la languette 51 pour établissement d'un court-circuit.

Cette languette 29 (figure 7) s'étend axialement en direction opposée aux lames du bilame 28 destiné à recevoir le bouchon chauffant 1 enfoncé dans le corps 19, pour chauffage de celui-ci qui est automatiquement éjecté, lorsque la résistance qu'il porte est chaude.

Pour plus de précision sur la constitution du bouchon chauffant 1, on se reportera au susmentionné document US-A-4,500,774.

Comme visible également dans ces figures la paroi 46 entoure les languettes 50,51 et est ici en forme de croix (figure 6).

Sa section correspondant à une enseigne de pharmacien.

Suivant une caractéristique, cette paroi 46 est flanquée latéralement d'une paroi 90 (figure 6) et d'une portion 94 de la bague 40, dans laquelle est formé le logement 45.

Comme visible dans cette figure 6, la paroi 90 se raccorde aux parties supérieures et inférieures de la paroi 46 par des portions de raccordement et elle présente également une portion en forme de secteur circulaire dans le prolongement de la périphérie de la bague 40.

On profite de la paroi 90 pour fixer le carénage 63, prolongé pour cela au niveau de ladite paroi 90, par pliage en 64 (figure 6).

Il y a ainsi formation de deux cavités 92,93 séparées l'une de l'autre par la portion 94 et délimitées par les parois 46,90.

On appréciera que la portion 94 constitue une entretoise entre les parois 90,46 et qu'elle rigidifie avantageusement lesdites parois.

Il en est de même de la paroi 90 qui rigidifie la paroi 46.

Ainsi suivant une caractéristique, le logement 45 est pratiqué dans une nervure de rigidification de la première partie 46,47 du connecteur.

La lampe 54 est une lampe longue durée et porte des fils 55 soudés à des languettes d'alimentation 52,53, la languette 53 s'étend dans la cavité 92 et est connectée au corps 19 comme visible à la figure 9.

Plus précisément cette languette 53, traverse la bague 40 en étant ancrée dans celle-ci. Elle est admise à se déformer lorsque l'on enfonce le corps 19 dans la bague 40, pour être connectée ainsi à la borne négative de la batterie, ce qui simplifie les branchements.

La languette 52 est pliée et est propre à être reliée par le connecteur 170 à la borne positive de la batterie.

Elle s'étend en partie dans la cavité 93 et traverse par une ouverture 91 la paroi 46 pour se terminer par une portion 156 située dans la partie de connecteur.

Son montage s'effectue par enfilage dans le trou 91 et ancrage dans le fond 47.

On notera que la languette 51 présente deux ailes 62, à extrémité pliée en direction axiale, et que celles-ci servent de détrompeur (figure 8).

Le montage s'effectue de la manière suivante :

On commence par monter la languette 50 en enfilant celle-ci dans le trou du fond 47, puis on place la bague 61 à creusure à contour globalement rectangulaire, puis on monte la languette 51 sur la bague 61 en l'engageant latéralement en la faisant pénétrer dans l'ouverture du fond 47, on monte le corps d'allumage 19, celui-ci étant indexé automatiquement par les languettes 62 qui le guident, puis on monte la bague 60 et le bilame 28, la languette 29 étant alors convenablement positionnée et enfin on effectue la fixation à l'aide de la vis 30.

Ainsi qu'il ressort à l'évidence de la description, la bague 40 est en matériau électriquement isolant et le fond 47 participe au maintien des languettes 50,51, ce qui procure de la robustesse à l'allume-cigares.

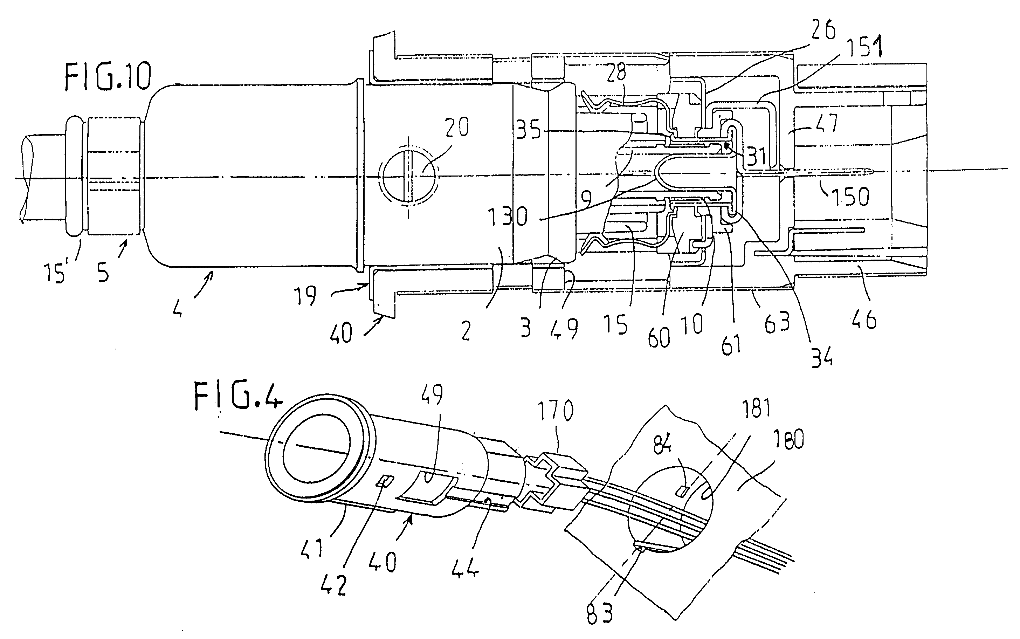

Tirant parti de cette caractéristique et du rôle protecteur de la bague 40, il devient alors possible (figure 10) de doter l'allume-cigares d'une broche centrale 130 à tête pénétrante.

Cette broche 130 appartient à une pièce 31 en forme de gobelet et elle s'érige à partir du fond de ladite pièce 31 en étant portée par le corps d'allumage 19.

Cette pièce 31 sert de pièces d'assemblage et joue le rôle de la vis 30 des figures précédentes.

Pour ce faire sa partie périphérique d'orientation axiale présente un épaulement 34, réalisé par pliage, et un épaulement de verrouillage 35.

L'épaulement 34 sert d'appui à une patte d'agrafage, que présente la languette 150 reliée à la borne positive.

Sur cette agrafe est montée la bague 61, puis une portion transversale de la languette 151 reliée à la borne négative de la batterie.

Le corps 19 est monté sur la bague 61 puis on enfile la bague 60 et enfin le bilame 28, l'ensemble étant maintenu en place par déformation de l'extrémité libre de la pièce 31 et formation de l'épaulement 35.

On notera que la portion périphérique de la pièce 31 traverse donc les bagues 60,61 le corps 19 et le bilame 28.

La tête de la broche centrale fait légèrement saillie axialement par rapport à l'épaulement 35 et au plan du bilame 28.

La broche 130 s'étend donc globalement vers l'extérieur du corps 19 en étant protégée par la bague 40 et soutenue par le fond 47.

Il y a ainsi formation d'un puits, il devient possible d'emmancher sur la broche 130, une broche 9 d'une fiche auxiliaire pour alimenter un accessoire ou un appareil électrique.

Cette prise comporte un corps isolant 4, en deux demi-coquilles, avec une queue 15' et un nez 15 de diamètre réduit.

Les deux demi-coquilles sont maintenues ensemble par un collier de serrage élastique 5 implanté au niveau de la queue 15' et par un premier élément conducteur 2 enveloppant ledit corps.

Cet élément 2 présente un rebord d'accrochage 3 propre à coopérer avec les languettes 22.

Il est relié à l'un des câbles d'alimentation par un dé de raccordement dont seule la vis de fixation 20 est visible.

Cette fiche présente une broche 9 élastiquement déformable en étant ici fractionnée en mâchoires par des fentes.

Sur cette broche 9 est monté un anneau de serrage 10 fendu à la faveur d'une gorge que présente ladite broche. La broche 9 s'enfile à serrage sur la broche 130.

Ainsi qu'on l'aura compris la taille de l'alésage interne de la broche 9 est fonction de celui de la broche 130 en sorte qu'un contact intime et énergique aient lieu entre lesdites broches. Ce contact étant favorisé par l'anneau 10.

Grâce à cette disposition un passage de courant de forte intensité est rendu possible.

Bien entendu la présente invention n'est pas limitée aux exemples de réalisation décrits.

En particulier les moyens de montage 42,84 et les moyens de guidage 83,41,44,84 peuvent être différents, et on peut inverser les structures.

Par exemple les rainures 44 peuvent appartenir à la paroi 80,180, la bague 40 portant alors deux nervures pour coopération avec lesdites rainures 44, chaque nervure étant dotée d'un redent 84 propre à coopérer avec un trou correspondant pratiqué dans la rainure de la paroi.

De même, on peut inverser la structure des moyens d'engagement, le corps 19 présentant des trous, éventuellement échelonnés axialement, pour coopération avec des saillies portées intérieurement par la bague 40.

La broche 130 peut être pleine et être rapportée sur le fond de la pièce 131.

La broche 130 peut être distincte de la pièce 131, se réduisant alors à un simple rivet fixant les pièces 150,61,152,60 et 28 au fond 26.

Cette broche à tête pénétrante, en forme d'ogive, de demi-olives ou tronconique, peut être alors rapportée sur le fond 47 et être reliée à la languette 150.

Cette broche est alors disposée à l'intérieur d'un puits délimité par ladite pièce 131.

Bien entendu le corps 19 et la bague 40, de forme complémentaire, peuvent être cylindriques à section carrée.

## Revendications

1. Allume-cigares, notamment pour véhicules automobiles, du genre comportant un bouchon chauffant (1), un corps d'allumage (19) en matériau conducteur servant de réceptacle au bouchon chauffant (1) et portant intérieurement à isolation électrique un bilame (28) pour accrochage du bouchon chauffant (1) et chauffage de celui-ci, dans lequel le corps d'allumage (19) présente un fond troué (26) à partir duquel, pour alimentation de l'allume-cigares, s'érigent en saillie vers l'extérieur des languettes d'alimentation (50,51-150,151), dont l'une, dite première languette (51,151), est en contact avec ledit fond (26), caractérisé en ce que le bilame (28) porte une languette de sécurité (29) propre à coopérer avec la première languette d'alimentation (51,151).

2. Allume-cigares selon la revendication 1, caractérisé en ce que la languette de sécurité (29) porte un plot de contact.

3. Allume-cigares selon la revendication 1 ou 2, caractérisé en ce que la languette de sécurité (29) est propre à coopérer avec une partie (56) d'orientation axiale de la première languette d'alimentation (51,151).

4. Allume-cigares selon l'une quelconque des revendications 1 à 3, dans lequel le bilame (28) présente des lames d'orientation axiale, caractérisé en ce que la languette de sécurité (29) s'étend axialement en direction opposée aux lames du bilame (28).

5. Allume-cigares selon la revendication 4, caractérisé en ce que la languette de sécurité (29) traverse le fond (26) du corps d'allumage (19).

6. Allume-cigares selon l'une quelconque des revendications 1 à 5, dans lequel le corps d'allumage (19) est enfilé dans une bague éclairante (40), caractérisé en ce que la bague éclairante (40) présente extérieurement au corps d'allumage (19) une extrémité libre formant une première partie (46,47) d'un dispositif de connexion des languettes d'alimentation (50,51-150,151) de l'allume-cigares.

7. Allume-cigares selon la revendication 6, caractérisé en ce que la bague éclairante (40) entoure la languette de sécurité (29).

## Claims

1. A cigar lighter, especially for motor vehicles, of the kind comprising a lighter plug (1), a heating body (19) of conductive material serving as a receptacle for the lighter plug (1) and carrying within it, with electrical insulation, a bimetal clip (28) for clipping attachment of the lighter plug (1) and for heating of the latter, in which the heating body (19) has a base (26) having a hole, from which, for the power supply of the cigar lighter, there extend, projecting outwardly, power supply tongues (50, 51 - 150, 151), one of which, referred to as a first tongue (51, 151), is in contact with the said base (26), characterised in that the bimetal clip (28) carries a safety tongue (29) arranged to cooperate with the first power supply tongue (51, 151).

2. A cigar lighter according to Claim 1, characterised in that the safety tongue (29) carries a contact pad.

3. A cigar lighter according to Claim 1 or Claim 2, characterised in that the safety tongue (29) is adapted to cooperate with an axially orientated portion (56) of the first power supply tongue (51, 151).

4. A cigar lighter according to any one of Claims 1 to 3, in which the bimetal clip (28) has axially orientated fingers, characterised in that the safety tongue (29) extends in the opposite axial direction from the fingers of the bimetal strip (28).

5. A cigar lighter according to Claim 4, characterised in that the safety tongue (29) extends through the base (26) of the heating body (19).

6. A cigar lighter according to any one of Claims 1 to 5, in which the heating body (19) is inserted in an illuminating ring (40), characterised in that the illuminating ring (40) has, outside the heating body (19), a free end constituting a first portion (46, 47) of a connection device for the power supply tongues (50, 51 - 150, 151) of the cigar lighter.

7. A cigar lighter according to Claim 6, characterised in that the illuminating ring (40) surrounds the safety tongue.

## Patentansprüche

1. Zigarettenanzünder, vorzugsweise für Kraftfahrzeuge, in der Ausführung mit einem Heizeinsatz (1), einem Anzündkörper (19) aus leitendem Material, der als Aufnahme für den Heizeinsatz (1) dient und innen mit elektrischer Isolierung einen Bimetallstreifen (28) für die Verrastung des Heizeinsatzes (1) und seine Erhitzung trägt, wobei der Anzündkörper (19) einen gelochten Boden (26) aufweist, von dem aus sich für die Stromversorgung des Zigarettenanzünders Stromzuleitungszungen (50, 51-150, 151) nach außen vorspringend erstrecken, von denen eine, die als erste Zunge (51, 151) bezeichnet wird, mit dem besagten Boden (26) in Kontakt steht , **dadurch gekennzeichnet,** daß der Bimetallstreifen (28) eine Sicherheitszunge (29) trägt, die mit der ersten Stromzuleitungszunge (51, 151) Zusammenwirken kann.

2. Zigarettenanzünder nach Anspruch 1 , **dadurch gekennzeichnet,** daß die Sicherheitszunge (29) ein Kontaktstück trägt.

3. Zigarettenanzünder nach Anspruch 1 oder 2 , **dadurch gekennzeichnet,** daß die Sicherheitszunge (29) mit einem axial ausgerichteten Teil (56) der ersten Stromzuleitungszunge (51, 151) Zusammenwirken kann.

4. Zigarettenanzünder nach einem der Ansprüche 1 bis 3, bei dem der Bimetallstreifen (28) axial ausgerichtete Lamellen aufweist, **dadurch gekennzeichnet**, daß sich die Sicherheitszunge (29) axial in entgegengesetzter Richtung zu den Lamellen des Bimetallstreifens (28) erstreckt.

5. Zigarettenanzünder nach Anspruch 4 , **dadurch gekennzeichnet,** daß die Sicherheitszunge (29) durch den Boden (26) des Anzündkörpers (19) hindurchgeht.

6. Zigarettenanzünder nach einem der Ansprüche 1 bis 5, bei dem der Anzündkörper (19) in einen Leuchtring (40) eingesteckt ist, **dadurch gekennzeichnet,** daß der Leuchtring (40) außen am Anzündkörper (19) ein freies Ende aufweist, das einen ersten Teil (46, 47) einer Anschlußvorrichtung für die Stromzuleitungszungen (50, 51-150, 151) des Zigarettenanzünders bildet.

7. Zigarettenanzünder nach Anspruch 6 , **dadurch gekennzeichnet,** daß der Leuchtring (40) die Sicherheitszunge (29) umgibt.
